# EUROPEAN PATENT SPECIFICATION

(11) **EP 2 893 206 B1**
(45) Date of publication and mention of the grant of the patent: **12.10.2016**
(21) Application number: 13762375.7
(22) Date of filing: 22.08.2013
(51) Int. Cl.: F16C 27/04, F16C 33/10, F16C 17/04

(54) **HYDRODYNAMIC BEARING APPLIED ON A CONTACT INTERFACE OF A FLUID COMPRESSOR BASED ON A SPIRAL TYPE MECHANISM**
HYDRODYNAMISCHES LAGER AUF EINER KONTAKTSCHNITTSTELLE EINES FLUIDKOMPRESSORS AUF GRUNDLAGE EINES SPIRALMECHANISMUS
PALIER HYDRODYNAMIQUE APPLIQUÉ SUR UNE INTERFACE DE CONTACT D'UN COMPRESSEUR DE FLUIDE BASÉ SUR UN MÉCANISME DE TYPE HÉLICOÏDAL

(30) Priority: 06.09.2012 BR 102012226901
(43) Date of publication of application: 15.07.2015
(73) Proprietor: Whirlpool S.A., 04578-000 São Paulo SP (BR)
(72) Inventor: TORRES, Fernando Withers, CEP:89221-040 Joinville - SC (BR); MELLO, José Daniel Biasoli de, CEP: 38400-214 - Uberlândia (BR)
(74) Representative: Soldatini, Andrea
(86) International application number: PCT/BR2013/000321
(87) International publication number: WO 2014/040153

(56) References cited:
- EP-A2- 1 207 314
- JP-A- H0 835 495
- US-B2- 6 537 045

## Description

### Field of the Invention

This invention refers to a hydrodynamic bearing applied on a contact interface of a fluid compressor based on a spiral type mechanism and, more particularly, a thrust bearing that is specially texturized (partial texturization) applied on the contact interface between the block and the non-orbiting whorl of a fluid compressor based on a spiral type mechanism.

The aforesaid partial texturization of the revealed hydrodynamic bearing is especially capable of acting as a reservoir of lubricating fluid and as a deposit of possible abrasive particles produced from the wear of other elements of the fluid compressor based on the spiral type mechanism.

### Foundations of the invention

It is well-known to specialists versed in the subject matter that fluid compressors based on a spiral type mechanisms, or scroll compressors, comprise of fluid compression devices, whose mechanism is based on a conceptual technology initially published in 1905 and, more particularly, published in patent document US 801182.

According to this document, a spiral type mechanism comprises of two similar structures (circular plates with a perpendicular wall that has a fundamentally spiral outline) inversely coupled together (where the top of one perpendicular wall of a fundamentally spiraled outline of one circular plate is turned to the base of another circular plate, being the true reciprocal) through a coupling. Moreover, one of these structures is also attached to an electric motor.

The structure attached to the electric motor is denominated the orbiting whorl and the other structure is denominated the fixed whorl.

According to the fundamental principles described in document US 801182, the means of coupling used between the orbiting whorl and the fixed whorl comprises of an element that is capable of providing the orbiting whorl with an orbital movement from the rotational movement of the shaft of the electric motor. Therefore, and according to this concept, the orbital movement of the orbiting whorl, in relation to the fixed whorl, results in allowing that the spiraled perpendicular wall of the orbiting whorl alters, continuously and gradually, the points of contact between its lateral face and the lateral face of the fixed whorl. This continuous and gradual alteration between these points of contact of spiraled perpendicular walls produces continuously decreasing chambers. Because these virtual chambers can be filled with diverse fluids, the possibility of the compression of these diverse fluids can take place.

Generally, the spiral type mechanism and the electric motor are attached in the interior of the same housing (normally hermetic), and, therefore, it is common to fix them, one to the other, through a rigid structure, which is known as a compressor block.

Accordingly, the conventional embodiments of fluid compressors based on spiral type mechanisms establish multiple contact interfaces between the moving sections and the fixed sections. Among these contact interfaces is emphasized the contact interface between the shaft of the motor and the piping of the block, the contact interface between the tops and bases of the orbiting and fixed whorls, and the contact interface between the lower face of the orbiting whorl and the upper face of the block.

Generally, and according to the traditional teaching of the state of the art, these contact interfaces use hydrodynamic bearings, i.e. "chambers" of lubricating fluids are used between the contact interfaces. These hydrodynamic bearings have the main objective to reduce the contact and, consequently, the attrition between the elements that define the previously mentioned contact interfaces.

The current state of the art comprises of an infinite number of patent documents that describe concepts and optimizations applied on hydrodynamic bearings, in addition to lubrication systems of these bearings.

With respect to embodiments of fluid compressors, especially fluid compressors based on a spiral type mechanism, it is common to note that the lubricating fluid that is responsible for the lubrication of all the bearings is stored in the interior of the hermetic housing of the compressor. It is conducted to the aforesaid bearings through the shaft of the electric motor from the moment when the compressor is started up, and returns afterwards to the "bottom" of the hermetic housing due to the action of gravity.

In this regard, it is observed that in these embodiments the lower bearings are lubricated before the upper bearings. This signifies that some of the contact interfaces that use hydrodynamic bearings are late in relation to the starting up of the compressor, entering into direct contact after a few seconds.

It is observed that, during the useful life of these compressors, certain contact interfaces tend to be more worn than other contact interfaces. For example, it is noted that the contact interface between the lower face of the orbiting whorl and the upper face of the block tend to wear quicker than the contact interface between the shaft of the motor and the piping of the block. The latter uses hydrodynamic bearings with a time interval that is less than the time interval that the former uses hydrodynamic bearings.

This aspect characterizes a significant negative aspect. The established useful lives are different for the contact interfaces of the same compressor. Therefore, the same compressor can be replaced (or submitted to maintenance) when part of its components are still preserved. Alternatively, the same compressor could be continually used with part of its components damaged.

However, the current state of the art also provides embodiments that are specially designed to resolve the abovementioned negative characteristic.

Examples of these embodiments can be found in the documents US 7329109 and JP 2002213374.

Document US 7329109 describes a fluid compressor based on a spiral type mechanism whose contact interface between the tops and bases of the orbiting and fixed whorls provides at least one retention recess of oil formed in at least one of these components. The aforesaid retention recess of oil is constructed in a manner to preserve a quantity of oil capable of providing the hydrodynamic bearing between these components at the same time when the compressor is started up. Moreover, this hydrodynamic "chamber" also acts as a seal between the whorls.

Document JP 2002213374 describes a fluid compressor based on a spiral type mechanism whose upper face of the whorl provides a plurality of concavities that optimize the hydrodynamic bearing of the contact interface between the tops and bases of the orbiting and fixed whorls. Perceptibly, the objectives of this embodiment are similar to the objectives of the embodiment described in document US 7329109.

There are further examples of embodiments, pertaining to the current state of the art, which attempt to resolve, or at least mitigate, the previously cited negative characteristics. Of special interest to the invention in question are the embodiments described in documents US 6537045 and US 7422423.

Document US 6537045 describes a fluid compressor based on a spiral type mechanism whose contact interface between the lower face of the orbiting whorl and the upper face of the block provides multiple recesses of micrometric depth (from 30 µm to 150 µm). These are specially designed for the optimization of the hydrodynamic bearing of the aforesaid contact interface. These recesses also have the objective to act as pre-reservoirs of lubricating fluid and are supposedly capable of preserving a quantity that is capable of promoting the hydrodynamic bearing between these components at the same time when the compressor is started up.

In any event, the depth of the multiple recesses described in document US 6537045 is too large. It does not allow for the creation of a field of pressure that is necessary to provide support for the load. This is because in films of oil with the special viscosity for the Scroll type compressors (ISO 10 to ISO 68), the "height" of the film of oil (in a hydrodynamic setting) is fundamentally defined by the maximum depth of the recesses. When this depth is large, the "height" of the film of oil produces a fundamentally null "support pressure", as ascertained through the basic precepts of the classic theory of lubrication.

Document US 7422423 describes an alternative compressor used in refrigeration systems. The aforesaid compressor provides a plurality of "contact sections" that exist between the moving parts of the compressor. In particular, the "contact sections" are spherical shaped recesses, which are configured to cause a vortex flow of the oil retained therein. It is also noted that the aforementioned spherical recesses are shaped through grinding by machining. Furthermore, the teaching described in document US 7422423 is especially efficient when applied on hydrodynamic bearings where there is a rotational or alternating movement. However, embodiments are not produced that are especially dedicated to hydrodynamic bearings where there is orbital movement.

Based on the context explained above, it is evident that there is a need for the development of a solution capable of optimizing the hydrodynamic bearing of contact interfaces, where there is orbital movement particularly between elements that form part of fluid compressors especially based on spiral type mechanisms.

### Objectives of the Invention

Accordingly, it is one of the objectives of this invention to produce a hydrodynamic bearing applied on a contact interface of a fluid compressor based on a spiral type mechanism capable of optimizing the hydrodynamic bearing of the contact interface between the lower face of the orbiting whorl and the upper face of the block.

It is also one of the objectives of this invention to disclose a hydrodynamic bearing applied on a contact interface of a fluid compressor based on a spiral type mechanism capable of producing the effect known as an equivalent "Rayleigh step", for the conjoined effect of the partially texturized micro-cavities.

It is also one of the objectives of this invention that the hydrodynamic bearing applied on a contact interface of a fluid compressor based on the disclosed spiral type mechanism shall also be capable of shaping deposits for the abrasive particles produced from the wear of the internal components of the compressor during its entire life, removing them from the contact between the involved surfaces, thereby promoting less associated wear.

### Summary of the Invention

These and other objectives of the disclosed invention are totally obtained by means of the hydrodynamic bearing applied on a contact interface of a fluid compressor based on a spiral type mechanism.

According to the principles and objectives of this invention, the compressor comprises of at least one hermetic housing, at least one electric motor, at least one block, at least a spiral type mechanism comprising of at least one orbiting whorl and at least one non-orbiting whorl.

Also according to the principles and objectives of this invention, the hydrodynamic bearing, which is located in the contact interface between the lower face of the orbiting whorl and the upper face of the block, comprises of at least two regions having surfaces comprising of a plurality of micro-cavities spaced apart by regions having substantially smooth surfaces.

Among the possible embodiments of the invention in question, it is emphasized that the abovementioned regions can be defined on the lower face of the orbiting whorl or the upper face of the block. They can also be simultaneously defined on the lower face of the orbiting whorl and the upper face of the block.

In this regard, it is evident that the sum of the regions with micro-cavities corresponds from 30% to 80% of the area where they are located. The aforesaid micro-cavities also comprise of deposits of abrasive particles.

It is emphasized that the micro-cavities have original specifications. In this regard, each micro-cavity has a depth of between 1 µm to 30 µm, a surface area of between 5 µm² to 100 µm², and a border radius of between 0.01 µm to 30 µm. Furthermore, and preferentially, the micro-cavities (31) are spaced apart by a distance of between 1 µm to 100 µm.

It is also observed that the aforesaid micro-cavities comprise of a surface area that has a circular, elliptical or even rectangular profile. In this latter case, each micro-cavity with a surface area that has a rectangular profile comprises of micro-channels.

Optionally, it is also mentioned that at least one radial channel is located in at least one of the substantially smooth surface regions.

### Brief Description of the Drawings

The invention in question will be described in detail based on the figures listed below, as follows:
Figure 1 illustrates, in an isometric perspective, a fluid compressor block based on a spiral type mechanism, according to the preferential embodiment of this invention; and
Figure 2 illustrates an amplified detail taken from figure 1.

### Detailed Description of the Invention

According to the physical concepts amply studied by the specialists in the subject matter and especially according to the classical theory of lubrication, it is known that the concept "Rayleigh step" concerns the production of hydrodynamic pressure, or support pressure, in a lubrication fluid located between two moving bodies. In this regard, when there is a physical step between two surfaces in relative movement, and separated by a fluid with appropriate viscosity, a "maximum" occurs in the gradient of the hydrodynamic pressure, which contributes significantly to the efficiency of the lubrication.

It is observed that the "texturization" (conjoining of recesses) defined in the bearings exemplified in documents US 6537045 and US 7422423 do not obtain this effect. The simple space between the recesses is incapable of configuring an actual physical step.

It is in this regard that this invention is emphasized. It discloses a specially texturized hydrodynamic bearing (applied on a contact interface of a fluid compressor based on a spiral type mechanism). This special texturization is, in general terms, from a partial texturization.

The aforesaid partial texturization is, according to the concepts and objectives of this invention, applied on a contact interface between the block and the non-orbiting whorl of a fluid compressor based on a spiral type mechanism.

This timely solution, up to now inexistent in the current state of the art, is then shaped through the transition from the texturized region to the non-texturized region, where it forms, due to the difference in depths, a physical step that produces a "maximum" in the fluid pressure.

According to the fundamental concept of the invention in question, only one of the faces of the contact interface between the block and the non-orbiting whorl of a fluid compressor based on a spiral type mechanism requires to be partially texturized. However, both the faces (the block and the non-orbiting whorl) can be partially texturized without this altering the efficiency of the production of the aforesaid "maximum" in the fluid pressure.

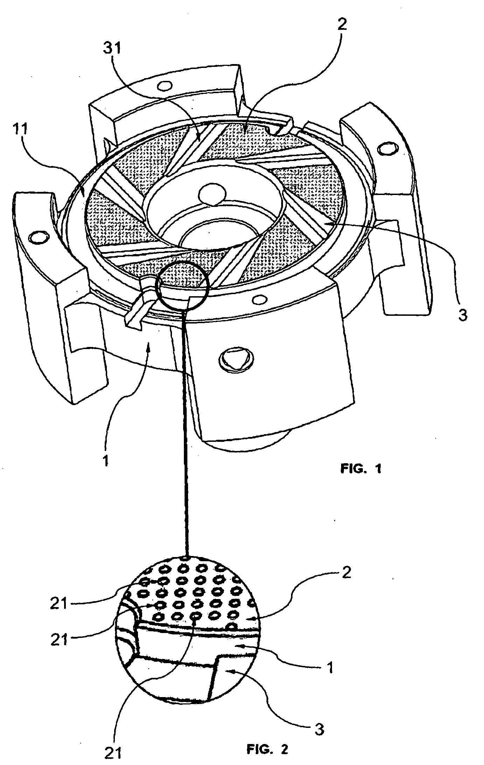

In this regard, figures 1 and 2 illustrate the preferential embodiment of the invention in question.

Therefore, and according to the preferential embodiment of this invention, a hydrodynamic bearing is disclosed (applied on a contact interface of a fluid compressor based on a spiral type mechanism) where one of the faces of its composition is partially texturized;

This signifies that the block 1 of the fluid compressor provides on its upper face 11 six texturized regions 2 and six regions 3 with substantially smooth surfaces. However, it is emphasized that this arrangement/embodiment is only of an illustrative character. In truth, and according to the fundamental concept of the invention in question, it is observed that the sum of the regions 2 corresponds from 30% to 80% of the area where they are located.

Each one of the regions 2 provides a texturization defined by the existence of a plurality of micro-cavities 21 on its surface.

Preferentially, each micro-cavity 21 has certain dimensional characteristics that are capable of optimizing the creation and maintenance of a lubricating film from the lubricating oil normally used in the lubrication of the bearings of the fluid compressors. This signifies that the aforesaid micro-cavities 21 act as a type of storage pocket of lubricating oil.

More particularly, it is noted that the dimensional characteristics of the micro-cavities 21, as disclosed in this invention, in addition to supporting the creation and maintenance of the lubricating film, also act as deposits of abrasive particles that are produced from the direct contact between the metallic bodies that form part of the fluid compressor.

Accordingly, each micro-cavity 21 has a depth of between 1 µm to 30 µm, a surface area of between 5 µm² to 100 µm² and a border radius of between 0.01 µm to 30 µm.

It is emphasized that the border radius determines a step in the pressure field. The larger the border radius, the less will be the difference of pressure in the aforesaid produced pressure field.

Furthermore, it is also verified that the micro-cavities 21 are spaced apart by a distance of between 1 µm to 100 µm. This distance helps to maintain the lubricating film stable.

It is also observed that, according to the preferential embodiment of this invention, the micro-cavities 21 comprise of a surface area that has a circular profile.

Based on the context described above, it is noted that the regions 2, in the manner in which they are inserted between regions 3, unify the individual mechanism of each micro-cavity 21, with their collective effect producing an equivalent convergent effect between the surfaces. This effect is equivalent to the substantial increase of the capacity of the load of the lubricating film. The virtual difference between the heights of the surfaces 2 and 3 creates a significant pressure field.

In this regard, and also according to the preferential embodiment of the invention in question, the sum of the regions 2 corresponds from 30% to 80% of the area of the face where they are located.

Optionally, each micro-cavity 21 can also comprise of a surface area that has an elliptical profile, although this embodiment is not illustrated.

Furthermore, also optionally, each micro-cavity 21 can also comprise of a surface area that has a rectangular profile, making a micro-channel, which is also capable of optimizing the creation and maintenance of a lubricating film, in addition to also acting as a deposit of abrasive particles.

Independent of the format and location (on the upper face of the block of the compressor or on the lower face of the non-orbiting whorl) of the micro-cavities 21, it is disclosed that they can be obtained by several, already known, industrial processes.

Accordingly, the aforesaid micro-cavities 21 are preferentially made through grinding using a laser. In this situation, the micro-cavities 21 can be specially guided and shaped into almost exact dimensions.

Optionally, the micro-cavities 21 can also be obtained through grinding using electrolytic machining, or even by electrochemical corrosion without masking and other processes that are capable of altering the roughness of metallic surfaces.

Examples of the embodiment of the object of this invention having been described, it should be understood that the scope of the same includes other possible variations, which are limited only by the content of the claims, including possible equivalent means.

## Claims

1. A fluid compressor based on a spiral type mechanism comprising a hydrodynamic bearing applied on a contact interface thereof, the compressor comprising of at least one hermetic housing, at least one electric motor, at least one block (1), at least a spiral type mechanism comprised by at least one orbiting whorl and at least one non-orbiting whorl; the hydrodynamic bearing is located in the contact interface between the lower face of the orbiting whorl and the upper face (11) of the block (1), and is **CHARACTERIZED by** the fact that it comprises:
at least two regions (2) spaced apart between regions (3);
the regions (2) have surfaces comprised of a plurality of micro-cavities (21);
the regions (3) have substantially smooth surfaces;
each micro-cavity (21) has a depth between 1 µm to 30 µm;
each micro-cavity (21) has a surface area between 5 µm² to 100 µm²;
each micro-cavity (21) has a border radius between 0.01 µm to 30 µm; and
the micro-cavities (21) are spaced apart by a distance between 1 µm to 100 µm.

2. A fluid compressor based on a spiral type mechanism, according to claim 1, **CHARACTERIZED by** the fact that each micro-cavity (21) comprises a surface area that has a circular profile.

3. A fluid compressor based on a spiral type mechanism, according to claim 1, **CHARACTERIZED by** the fact that each micro-cavity (21) comprises a surface area that has an elliptical profile.

4. A fluid compressor based on a spiral type mechanism, according to claim 1, **CHARACTERIZED by** the fact that each micro-cavity (21) comprises a surface area that has a rectangular profile.

5. A fluid compressor based on a spiral type mechanism, according to claim 4, **CHARACTERIZED by** the fact that each micro-cavity (21) with a surface area that has a rectangular profile comprises micro-channels.

6. A fluid compressor based on a spiral type mechanism, according to claim 1, **CHARACTERIZED by** the fact that the regions (2) and the regions (3) are defined on the lower face of the orbiting whorl.

7. A fluid compressor based on a spiral type mechanism, according to claim 1, **CHARACTERIZED by** the fact that the regions (2) and the regions (3) are defined on the upper face (11) of the block (1).

8. A fluid compressor based on a spiral type mechanism, according to claim 1, **CHARACTERIZED by** the fact that the regions (2) and the regions (3) are defined simultaneously on the lower face of the orbiting whorl and the upper face (11) of the block (1).

9. A fluid compressor based on a spiral type mechanism, according to claim 1, **CHARACTERIZED by** the fact that the sum of the regions (2) corresponds from 30% to 80% of the area where they are located.

10. A fluid compressor based on a spiral type mechanism, according to claim 1, **CHARACTERIZED by** the fact that at least one radial channel (31) is located in at least one of the regions (3).

11. A fluid compressor based on a spiral type mechanism, according to claim 1, **CHARACTERIZED by** the fact that the micro-cavities (21) comprise of deposits of abrasive particles.

## Patentansprüche

1. Fluidkompressor, der auf einem spiralartigen Mechanismus basiert, der ein hydrodynamisches Lager enthält, die an einer Kontaktverbindung davon angewandt ist, wobei der Kompressor enthält wenigstens ein hermetisches Gehäuse, wenigstens einen Elektromotor, wenigstens einen Block (1), wenigstens einen spiralartigen Mechanismus, der durch wenigstens eine umlaufende Windung und wenigstens eine nicht umlaufende Windung gebildet ist; wobei das hydrodynamische Lager in der Kontaktverbindung zwischen der unteren Seite der umlaufenden Windung und der oberen Seite (11) des Blockes (1) liegt, **GEKENNZEICHNET durch** die Tatsache, dass er enthält:
wenigstens zwei Regionen (2), die zwischen Regionen (3) beabstandet sind;
dass die Regionen (2) Oberflächen haben, die aus einer Mehrzahl von Mikrohohlräumen (21) bestehen;
dass die Regionen (3) im Wesentlichen glatte Oberflächen haben:
dass jeder Mikrohohlraum (21) eine Tiefe zwischen 1 µm bis 30 µm hat;
dass jeder Mikrohohlraum (21) eine Oberseitenfläche zwischen 5 µm² bis 100 µm² hat;
dass jeder Mikrohohlraum (21) einen Randradius zwischen 0,01 µm bis 30 µm hat; und
dass die Mikrohohlräume (21) **durch** einen Abstand zwischen 1 µm bis 100 µm beabstandet sind.

2. Fluidkompressor, der auf einem spiralartigen Mechanismus basiert, nach Anspruch 1, **GEKENNZEICHNET durch** die Tatsache, dass jeder Mikrohohlraum (21) eine Oberseitenfläche hat, die ein kreisartiges Profil hat.

3. Fluidkompressor, der auf einem spiralartigen Mechanismus basiert, nach Anspruch 1, **GEKENNZEICHNET durch** die Tatsache, dass jeder Mikrohohlraum (21) eine Oberseitenfläche hat, die in elliptisches Profil hat.

4. Fluidkompressor, der auf einem spiralartigen Mechanismus basiert, nach Anspruch 1, **GEKENNZEICHNET durch** die Tatsache, dass jeder Mikrohohlraum (21) eine Oberseitenfläche hat, die ein rechteckiges Profil hat.

5. Fluidkompressor, der auf einem spiralartigen Mechanismus basiert, nach Anspruch 4, **GEKENNZEICHNET durch** die Tatsache, dass jeder Mikrohohlraum (21) mit einer Oberseitenfläche, die ein rechteckiges Profil hat, Mikrokanäle enthält.

6. Fluidkompressor, der auf einem spiralartigen Mechanismus basiert, nach Anspruch 1, **GEKENNZEICHNET durch** die Tatsache, dass die Regionen (2) und die Regionen (3) auf der unteren Seite der umlaufenden Windung definiert sind.

7. Fluidkompressor, der auf einem spiralartigen Mechanismus basiert, nach Anspruch 1, **GEKENNZEICHNET durch** die Tatsache, dass die Regionen (2) und die Regionen (3) auf der oberen Seite (11) des Blockes (1) definiert sind.

8. Fluidkompressor, der auf einem spiralartigen Mechanismus basiert, nach Anspruch 1, **GEKENNZEICHNET durch** die Tatsache, dass die Regionen (2) und die Regionen (3) gleichzeitig auf der unteren Seite der umlaufenden Windung und der oberen Seite (11) des Blockes (1)definiert sind.

9. Fluidkompressor, der auf einem spiralartigen Mechanismus basiert, nach Anspruch 1, **GEKENNZEICHNET durch** die Tatsache, dass die Summe der Regionen (2) von 30 % bis 80 % der Fläche entsprechen, wo sie liegen.

10. Fluidkompressor, der auf einem spiralartigen Mechanismus basiert, nach Anspruch 1, **GEKENNZEICHNET durch** die Tatsache, dass wenigstens ein radialer Kanal (31) in wenigstens einer der Regionen (3) liegt.

11. Fluidkompressor, der auf einem spiralartigen Mechanismus basiert, nach Anspruch 1, **GEKENNZEICHNET durch** die Tatsache, dass die Mikrohohlräume (21) aus Ablagerungen von abrasiven Partikeln bestehen

## Revendications

1. Un compresseur de fluide basé sur un mécanisme de type hélicoïdal comprenant un palier hydrodynamique appliqué sur une interface de contact du compresseur, le compresseur comprenant au moins un boîtier hermétique, au moins un moteur électrique, au moins un bloc (1), au moins un mécanisme de type hélicoïdal constitué par au moins une spire orbitale et au moins une spire non orbitale ; le palier hydrodynamique est situé dans l'interface de contact entre la face inférieure de la spire orbitale et la face supérieure (11) du bloc (1), et est **CARACTERISE par le fait qu'**il comprend :
• au moins deux régions (2) espacées l'une de l'autre par des régions (3) ;
• les régions (2) ont des surfaces constituées d'une pluralité de microcavités (21) ;
• les régions (3) ont des surface sensiblement lisses ;
• chaque microcavité (21) présente une profondeur entre 1µm à 30µm;
• chaque microcavité (21) a une aire de surface entre 5µm² à 100µm² ;
• chaque microcavité (21) a un rayon de frontière entre 0,01µm à 30µm ; et
• les microcavités (21) sont espacées les unes des autres d'une distance entre 1µm à 100µm.

2. Un compresseur de fluide basé sur un mécanisme de type hélicoïdal selon la revendication 1, **CARACTERISE par le fait que** chaque microcavité (21) comprend une aire de surface qui présente un profil circulaire.

3. Un compresseur de fluide basé sur un mécanisme de type hélicoïdal selon la revendication 1, **CARACTERISE par le fait que** chaque microcavité (21) comprend une aire de surface qui présente un profil elliptique.

4. Un compresseur de fluide basé sur un mécanisme de type hélicoïdal selon la revendication 1, **CARACTERISE par le fait que** chaque microcavité (21) comprend une aire de surface qui présente un profil rectangulaire.

5. Un compresseur de fluide basé sur un mécanisme de type hélicoïdal selon la revendication 4, **CARACTERISE par le fait que** chaque microcavité (21) avec une aire de surface qui présente un profil rectangulaire comprend des micro-canaux.

6. Un compresseur de fluide basé sur un mécanisme de type hélicoïdal selon la revendication 1, **CARACTERISE par le fait que** les régions (2) et les régions (3) sont définies sur la face inférieure de la spire orbitale.

7. Un compresseur de fluide basé sur un mécanisme de type hélicoïdal selon la revendication 1, **CARACTERISE par le fait que** les régions (2) et les régions (3) sont définies sur la face supérieure (11) du bloc (1).

8. Un compresseur de fluide basé sur un mécanisme de type hélicoïdal selon la revendication 1, **CARACTERISE par le fait que** les régions (2) et les régions (3) sont définies simultanément sur la face inférieure de la spire orbitale et face supérieure (11) du bloc (1).

9. Un compresseur de fluide basé sur un mécanisme de type hélicoïdal selon la revendication 1, **CARACTERISE par le fait que** la somme des régions (2) correspond à 30% à 80% de l'aire où elles se situent.

10. Un compresseur de fluide basé sur un mécanisme de type hélicoïdal selon la revendication 1, **CARACTERISE par le fait qu'**au moins un canal radial (31) est situé dans au moins une des régions (3).

11. Un compresseur de fluide basé sur un mécanisme de type hélicoïdal selon la revendication 1, **CARACTERISE par le fait que** les microcavités (21) comportent des dépôts de particules abrasives.
